# EUROPEAN PATENT APPLICATION

(11) **EP 4 184 529 A1**
(43) Date of publication of application: **24.05.2023**
(21) Application number: 21209981.6
(22) Date of filing: 23.11.2021
(51) Int. Cl.: H01B 1/22, C09D 11/03, C09D 11/101, C09D 11/102, C09D 11/52

(54) **HIGHLY CONDUCTIVE FILAMENT FOR FUSED DEPOSITION MODELING**

(71) Applicant: Karlsruher Institut für Technologie, 76131 Karlsruhe (DE)
(72) Inventor: Sun, Hongye, 76133 Karlsruhe (DE); Willenbacher, Norbert, 67292 Kirchheimbolanden (DE); Wenzhe, Ge, 76137 Karlsruhe (DE)

(57) **Abstract**

The present invention relates to a highly conductive filament for Fused Deposition Modeling, to its manufacture using a highly conductive paste based on a capillary suspension and to its use in a Fused Deposition Modeling process.

## Description

The present invention relates to a highly conductive filament for Fused Deposition Modeling, to its manufacture using a highly conductive paste based on a capillary suspension and to its use in a Fused Deposition Modeling process.

Printed electronics play a significant role in the electronics fabrication due to advantages in high-throughput production and flexibility in material selection and processing methods. Additive Manufacturing (AM) technologies, which features fast prototyping and multiple layer complex electronics, has paved the way in new areas of electronics fabrication. The printing of electrical components such as sensors (H. Choudhary, MAPAN-Journal of Metrology Society of India 2021, 36, 2, 405-422) resistors, capacitors, and inductors, as well as circuits and interconnects (S.-Y. Wu et al., Microsystems & Nanoengineering 2015, 1, 15013) has been widely reported.

Fused Deposition Modeling (FDM), also known as Fused Filament Fabrication (FFF), is one of the material extrusion processes within Additive Manufacturing, along with Direct Ink Writing (DIW), in which a material is selectively dispensed through a nozzle or orifice.

FDM is a popular Additive Manufacturing technology due to its low-cost and convenient operation. Availability of cheap FDM filaments and affordable desktop FDM printers have driven its rapid growth in both industrial and consumer market. Furthermore, Additive Manufacturing flexibility has opened new opportunities for one-step fabrication, which is not possible with conventional production methods. E.g., electrical components such as light-emitting diodes (LEDs) can be directly embedded in the printed body by just stopping and re-initiating the printing process (V. Katseli et al., Electrochemistry Communications 2019, 103, 100-103; P. K. Yuen, Biomicrofluidics 2016, 10, 4, 044104).

Within the last few years conductive filaments, along with the adaption of Additive Manufacturing, have gained increasing attention in printed electronics. Generally, a conductive filament consists of a polymer matrix and conductive fillers such as nano/micro carbon materials or metal particles. FDM printing of carbon nanotubes (CNT) filled thermoplastic polyurethane (TPU), CNT filled poly (methyl methacrylate) (PMMA) and carbon black filled polypropylene has been widely reported (L. Tzounis et al., Materials 2020, 13, 12, 2879; K. Ahmed et al., Polymer Journal 2019, 51, 5, 511-521; S. W. Kwok et al., Applied Materials Today 2017, 9, 167-175). However, due to the limited electrical conductivity of carbon materials, the resulting filaments exhibit low conductivity of less than 10 S/cm. To compensate the low conductivity, Mohan *et al.* developed a filament of a hybrid conductive polymer comprising graphene in PMMA (V. B. Mohan et al., Materials Today Communications 2018, 17, 554-561) . The bulk conductivity reached 14.2 S/cm at a filler loading of 10 weight fractions (wt.%) graphene and 10 wt.% conductive polymers. Nevertheless, the intrinsic low conductivity of fillers limits the further enhancement of carbon-based composites. Tan *et al.* reported two metal filled filaments: nickel filled nylon and low melting point Sn alloy filled polyethylene (J. Tan et al., Additive Manufacturing 2018, 23, 294-302). High conductivity of 310 S/cm was achieved with metal loading as high as 30 volume fractions (vol.%). However, the filament becomes fragile and brittle due to such high filler loading. More importantly, nozzle clogging/fouling during filament extrusion and Fused Deposition Modeling printing is inevitable when filler loading is particular high (X. Wei et al., Scientific reports 2015, 5, 1, 1-7).

The development of soft electronics with unique flexibility, conformability and stretchability opens up new frontiers in personalized healthcare, consumer electronics and soft robotics. Particularly, wearable sensors to collect real-time sensing data on human behavior are in high demand. While increasing the volume fraction (vol.%) of conductive solids/conductive fillers guarantees high conductivity, it deteriorates the stretchability and cyclic stability of current conductive elastomers. Overcoming the trade-off among the electrical and mechanical properties is still a major challenge.

Table 1 gives an overview of recent published work on FDM printable conductive filaments containing conductive fillers together with the measured values for conductivity/resistivity and stretchability. Only few filaments combine high conductivity and stretchability simultaneously.

**Table 1 Recent published work on FDM printable conductive filaments:**

| filament materials | Conductivity (S/cm) | Resistivity (Ω·cm) | Filler loading | Stretchability | Reference |
|---|---|---|---|---|---|
| MWCNT (multiwalled carbon nanotube)-filled TPU | 0.94 | 1.06 | 5wt.% | 129% | L. Tzounis et al., Materials 2020, 13, 12, 2879 |
| MWCNT-filled PMMA | 5.2 | 0.19 | 15 wt.% | 50% | K. Ahmed et al., Polymer Journal 2019 |
| carbon black (CB) filled polypropylene (PP) | 2 | 0.5 | 40 wt.% | No | S. W. Kwok et al., Applied Materials Today 2017, 9, 167-175 |
| Graphene and conductive polymer filled PMMA | 14.2 | 0.07 | 10 wt.% Graphene + 10 wt.% conductive polymer | No | V. B. Mohan et al., Materials Today Communications 2018, 17, 554-561 |
| Nickel filled nylon-6 | 310 | 0.003 | ~77 wt.% (~30 vol.%) | No | J. Tan et al., Additive Manu-facturing 2018, 23, 294-302 |
| Graphene filled ABS (Acrylnitril -Butadien-Styrol-Copolymer) | 1.05×10⁻⁵ | 10⁵ | 5.6wt.% | No | X. Wei et al., Scientific reports2015, 5, 1, 1-7 |

Commercial conductive filaments have been available for years. Table 2 summarizes the current conductive filaments on the market. Carbon filled polylactic acid (PLA) and TPU are the most commonly used filament materials. However, the electrical conductivity of carbon materials is three orders-of-magnitude lower than that of metal fillers, which limits the applications of the resulted filaments in printed electronics. Multi3D Inc. launched a copper filled PLA filament (Electrifi) with an ultralow resistivity of 0.006 Ohm·cm. The copper loading is as high as ~80 wt.% (~38 vol.%). As copper tends to oxidize at elevated printing temperature (> 130 °C), printed objects exhibit a high ohmic resistance during operation (https://www. multi3dllc.com/faqs/). Additionally, there is a lack of specified stretchability in most filaments.

**Table 2 Commercial conductive filaments on the market:**

| Manufacturer | Brand | Base polymer | Filler | Resistivity (Ω · cm) | Stretchability |
|---|---|---|---|---|---|
| Multi3D (US) | Electrifi | PLA | Copper | 0.006 | No |
| Black Magic 3D (US) | Graphene PLA | PLA | Graphene | 0.6 | No |
| Recreus (Spain) | Conductive Filaflex | TPU 92A | Unknown | 3.9 | Not mentioned |
| Proto-Pasta (US) | Conductive PLA | PLA | Carbon Black | > 800 | No |
| 3dk.berlin (Germany) | 3dkonductive | PLA | Carbon black | > 24 | No |
| Palmiga (Finland) | PI-ETPU | TPU 95A | Carbon black | 30 - 750 | 250% |

EP3708619A1 describes a highly conductive, printable ink for highly stretchable soft electronics, comprising: 1.5 to 21.0 vol.% of conductive hydrophobic silver particles as conductive solid phase, with respect to the total volume of ink, a thermoplastic polyurethane (TPU) dissolved in an organic polar solvent as bulk phase and a liquid secondary phase based on an ionic liquid, with a volume content in the range of 0.0015 to 2.1 vol.% with respect to the total volume of the ink, wherein the liquid secondary phase is immiscible with the bulk phase and does not wet the conductive solid phase, so that the three-phase system solid-liquid-liquid creates a capillary suspension. The printable ink described in EP3708619A1 can be printed using standard techniques such as screen printing, slot die coating, spraying or direct ink writing (DIW). In EP3708619A1, ultrastretchable conductors exhibits both superior electrical conductivity (>10³ S/cm) and stretchability (>1600%) with a 2/3 lower silver content compared to conventional conductive elastomers.

Highly conductive filaments with a low conductive filler content that are printable by Fused Deposition Modeling have not yet been described.

The objective technical problem was to provide a highly conductive filament with an electrical conductivity of at least 10² S/cm and a conductive filler content of less than 30 vol.%, which is printable via Fused Deposition Modeling (FDM). The filament to be produced should be compatible with state-of-the-art unit operations and should allow for large-scale production. The objective technical problem is solved by the embodiments characterized in the independent claims. Preferred embodiments can be found in the dependent claims.

Specifically, the present invention relates to a highly conductive filament for Fused Deposition Modeling and to its manufacture using a highly conductive paste based on a capillary suspension comprising a highly conductive solid phase, two immiscible liquid phases and an extrusion agent.

The term highly conductive according to the invention is related to an electrical conductivity of at least 10² S/cm up to 10⁴ S/cm.

A capillary suspension is a three-phase "solid-liquid-liquid" system comprising particles and, due to different polarities, immiscible liquids. Capillary forces can lead to the formation of a particulate paste in the capillary suspension, comprising a cross-sample particle network (E. Koos et al., Science 2011, 331, 6019, 897-900; E. Koos et al., Soft Matter 2012, 8, 3988-3994). This paste is highly elastic and gel-like, remains stable and doesn't show any sedimentation.

The first liquid (primary liquid), which dominates in terms of volume, is referred to as the bulk phase or primary phase, while the second liquid (secondary liquid), which is added only in small quantities, is referred to as the second phase or secondary phase. Liquid phases also include materials that are in the molten state, such as molten polymers. The only constraint on the choice of the secondary fluid besides its immiscibility with the bulk phase is that the three-phase contact angle θ of that fluid on the particles within the bulk phase must be smaller than 150°, typically being in the range from 90° to 150°, thus creating a capillary state capillary suspension (E. Koos et al., Soft Matter 2012, 8, 3988-3994). The three-phase contact angle is determined by the sessile drop method in accordance with ASTM Standard D7334. For the sessile drop method Ag particles are pressed into a condensed pellet and immersed in the primary polymer phase. A secondary fluid droplet is squeezed out from a syringe loaded above and settles down on the Ag pellet. The typical droplet size used in contact angle measurements is between 1 and 10 microliters. Droplet shape is recorded by a camera and the three-phase contact angle is determined by droplet profile fitting.

In a first aspect of the invention, there is provided a highly conductive paste based on a capillary suspension comprising:
(i) A liquid primary phase comprising, as a polymer base, at least one thermoplastic polymer dissolved in at least one solvent, wherein the volume content of the at least one thermoplastic polymer in the at least one solvent is in the range of 10% to 50%, wherein the liquid primary phase takes up 73.90 to 98.1985 vol.% with respect to the total volume of the paste,
(ii) at least one extrusion agent with a volume content in the range of 0.3 to 3 vol.% with respect to the total volume of the paste,
(iii) 1.5 to 21.0 vol.% of highly conductive hydrophobic silver particles, with respect to the total volume of the paste, as highly conductive solid phase,
(iv) a liquid secondary phase, with a volume content in the range of 0.0015 to 2.1 vol.% with respect to the total volume of the paste, while the volume ratio ρ between said liquid secondary phase and said highly conductive solid phase falls in the range of 0.001 to 0.1, wherein the liquid secondary phase is immiscible with the liquid primary phase and does not wet the highly conductive solid phase, so that the three-phase system creates a capillary suspension.

According to the invention, a thermoplastic polymer is a plastic that becomes ductile or moldable above a threshold temperature and returns to a solid state upon cooling (A. Pucci, Polymers 2018, 10, 1211).

The at least one thermoplastic polymer according to the invention is chosen from, e.g., acrylonitrile butadiene styrene (ABS), polycarbonate (PC), polylactic acid (PLA), polyether ether ketone (PEEK), polyetherimide (PEI), high-density polyethylene (HDPE), polyethylene terephthalate (PET), polyphenylsulfone (PPSU), high impact polystyrene (HIPS), polyvinyl alcohol (PVA), polypropylene (PP), polymethylmethacrylate (PMMA), acrylonitrile-styrene-acrylate (ASA), polyoxymethylene (POM), lignin, or thermoplastic elastomers such as thermoplastic polyurethane (TPU), styrenic block copolymers (SBC), thermoplastic polyamide (TPA), thermoplastic copolyester (TPC), thermoplastic vulcanizate (TPV), thermoplastic polyolefin elastomer (TPO) or thermoplastic styrene (TPS). In the case of using more than one thermoplastic polymer the thermoplastic polymers can also be chosen from a mixture of known thermoplastics.

Preferably, TPU is used as the at least one thermoplastic polymer. More preferably the TPU used has a shore hardness ranges from 35-98A to 50-77D, determined by DIN ISO 7619-1, and the melting temperature of the thermoplastic TPU ranges from 120 - 230 °C.

Typically, the volume content of the at least one thermoplastic polymer in the at least one solvent is in the range of 10 vol.% to 50 vol.%, preferably 25 vol.% to 40 vol.%. A shear mixer can be employed to shorten the dissolution time of the at least one thermoplastic polymer in the at least one solvent. The viscosity of the liquid primary phase depends very much on the at least one thermoplastic polymer and the at least one solvent used. The at least one solvent of the liquid primary phase is selected based on the type of thermoplastic polymer used and its solvency to dissolve the respective thermoplastic polymer.

The at least one solvent of the primary liquid phase is selected from, e.g., methanol, ethanol, acetone, ethyl acetate, methyl ethyl ketone (MEK), chloroform, sodium hydroxide (NaOH), ethylene dichloride (EDC), xylene, benzyl alcohol (BnOH), n-butanol, methylene chloride, tetrahydrofuran (THF), N,N-dimethylformamide (DMF), sulphuric acid, formic acid, nitrobenzene, toluene, limonene, dimethyl sulfoxide (DMSO), N,N-dimethylacetamide (DMAc), propylene glycol methyl ether acetate (PGMEA), or their combinations.

According to the invention, the volume content of the at least one extrusion agent is in the range of 0.3 to 3 vol.% with respect to the total volume of the paste. The at least one extrusion agent has to be thermally stable at a high extrusion temperature. It is chosen from low molecular weight organic additives such as silicone, octadecanoic acid, octadecanamide, octadecanol, calcium stearate, zinc stearate, diurethanes, polypropylene glycol (PPG), polytetramethylene glycol (PTMG), polyethylene glycol (PEG) such as PEG with an average molecular weight between 200 g/mol and 600 g/mol, e.g., PEG200, PEG300, PEG400, PEG500 or PEG600, stearic acid (SA), ethylene bis stearamide (EBS), dimethyl phthalate (DMP), diethyl phthalate (DEP), dibutyl phthalate (DBP), benzyl butyl phthalate (BBP), diethyl hexyl phthalate (DEHP), diaminonaphthalene (DAN), dibutyl adipate (DBA), triphenyl phosphate (TPhP), carboxylated nitrile rubber (XNBR) or hydrocarbon waxes such as polyethylene wax (PE-Wax), polypropylene wax (PP-Wax) or paraffin wax. The low molecular weight organic additives according to the invention have a molecular weight in the range of 100 - 10,000 g/mol, respectively.

Preferably polyethylene glycol (PEG) is used as the at least one extrusion agent according to the invention. More preferably PEG is used with an average molecular weight between 200 g/mol and 600 g/mol, e.g, PEG200, PEG300, PEG400, PEG500 or PEG600.

Preferably, the highly conductive hydrophobic silver particles have a medium particle size dso of 0.1 to 1000 µm, preferably 1 to 100 µm determined by laser diffraction (in accordance with DIN EN 725-5, ISO 13320).

According to the invention, the secondary liquid phase must be immiscible with the primary phase and should not wet the highly conductive solid phase. The amount of the secondary liquid is defined as ρ = V_{SF}/V_{Ag}, where V_{SF} is the volume of the secondary liquid and V_{Ag} is the volume of solid Ag particles. According to the invention, the secondary liquid phase content ρ falls in the range of 0.001 to 0.1. The type and amount of the secondary liquid control the morphology of the highly conductive particle network and influences not only the extrudability, but also the final conductivity of the filament according to the invention. In the present invention, preferably, an ionic liquid or an aqueous solution of an ionic liquid is used as secondary liquid. Ionic liquids, also called room temperature ionic liquids, are salts whose melting temperature is less than 100 °C. They are known for their negligible vapor pressure and high thermal stability. For example, the decomposition temperature of most imidazolium type ionic liquids was found to be above 200 °C (Cao et al. Industrial & engineering chemistry research 2014, 53, 8651-8664) .

The ionic liquid according to the invention may in particular contain a substituted or unsubstituted imidazolium cation, wherein the imidazolium cation of the salt is preferably substituted in the 1- and 3-position or in the 1-, 2- and 3-position with (C1-C6) alkyl groups. More preferably, the imidazolium cation is the 1-ethyl-3-methylimidazolium, 1,3-dimethylimidazolium or 1-butyl-3-methylimidazolium cation. The anion of the ionic liquid is usually a halide, perchlorate, pseudohalide, sulfate, phosphate, alkyl phosphate and/or a Cl-C6 carboxylate ion, the halide ion being a chloride, bromide and/or iodide ion, the pseudohalide ion being a cyanide, thiocyanate and/or cyanate ion and the C1-C6 carboxylate ion being formate, acetate, propionate, butyrate, hexanoate, maleate, fumarate, oxalate, lactate and/or pyruvate. Most preferably, 1-butyl-3-methylimidazolium iodide, 1-butyl-3-methylimidazolium chloride, or 1-butyl-3-methylimidazolium bromide is used as secondary liquid.

In a further aspect of the invention, there is provided a process for producing a highly conductive paste based on a capillary suspension, comprising the following steps:
A) Providing (i) a liquid primary phase comprising, as a polymer base, at least one thermoplastic polymer dissolved in at least one solvent, wherein the volume content of the at least one thermoplastic polymer in the at least one solvent is in the range of 10 vol.% to 50 vol.%, wherein the liquid primary phase takes up 73.90 to 98.1985 vol.% with respect to the total volume of the paste;
B) Pre-dispersing (ii) 0.3 to 3 vol.% of at least one extrusion agent, with respect to the total volume of the paste, in the liquid primary phase of step A);
C) Dispersing (iii) 1.5 to 21.0 vol.% of highly conductive hydrophobic silver particles, with respect to the total volume of the paste, as highly conductive solid phase, as well as (iv) a liquid secondary phase, with a volume content in the range of 0.0015 to 2.1 vol.% with respect to the total volume of the paste, in the mixture of the liquid primary phase and the at least one extrusion agent, while the volume ratio ρ between said liquid secondary phase and said highly conductive solid phase falls in the range of 0.001 to 0.1, wherein the liquid secondary phase is immiscible with the liquid primary phase and does not wet the highly conductive solid phase, so that the three-phase system creates a capillary suspension.

In another aspect of the invention, there is provided a highly conductive filament, comprising:
(i) A primary phase comprising, as a polymer base, at least one thermoplastic polymer, wherein the primary phase takes up 55.00 to 93.995 vol.% with respect to the total volume of the filament;
(ii) at least one extrusion agent with a volume content in the range of 1 to 12 vol.% with respect to the total volume of the filament;
(iii) 5 to 30 vol.% of highly conductive hydrophobic silver particles, with respect to the total volume of the filament, as highly conductive solid phase;
(iv) a liquid secondary phase, with a volume content in the range of 0.005 to 3.0 vol.% with respect to the total volume of the filament, while the volume ratio ρ between said liquid secondary phase and said highly conductive solid phase falls in the range of 0.001 to 0.1.

The content of the highly conductive hydrophobic silver (Ag) particles in the highly conductive filament according to the invention is 5 to 30 vol.%, preferably 8 to 20 vol.%. Preferably, the highly conductive hydrophobic silver particles for the highly conductive filament have a medium particle size d₅₀ of 0.1 to 1000 µm, preferably 1 to 100 µm determined by laser diffraction (in accordance with DIN EN 725-5, ISO 13320).

The selected hydrophobic Ag particles, usually Ag flakes, show good compatibility with the at least one thermoplastic polymer used, which is crucial for, e.g., good durability of the object to be printed using the highly conductive filament according to the invention.

The at least one thermoplastic polymer for the highly conductive filament is chosen from, e.g., acrylonitrile butadiene styrene (ABS), polycarbonate (PC), polylactic acid (PLA), polyether ether ketone (PEEK), polyetherimide (PEI), high-density polyethylene (HDPE), polyethylene terephthalate (PET), polyphenylsulfone (PPSU), high impact polystyrene (HIPS), polyvinyl alcohol (PVA), polypropylene (PP), polymethylmethacrylate (PMMA), acrylonitrile-styrene-acrylate (ASA), polyoxymethylene (POM), lignin, or thermoplastic elastomers such as thermoplastic polyurethane (TPU), styrenic block copolymers (SBC), thermoplastic polyamide (TPA), thermoplastic copolyester (TPC), thermoplastic vulcanizate (TPV), thermoplastic polyolefin elastomer (TPO) or thermoplastic styrene (TPS). In the case of using more than one thermoplastic polymer the thermoplastic polymers can also be chosen from a mixture of known thermoplastics.

Preferably, TPU is used as the at least one thermoplastic polymer for the highly conductive filament. More preferably the thermoplastic TPU used has a shore hardness ranges from 35-98A to 50-77D, determined by DIN ISO 7619-1, and the melting temperature of the thermoplastic TPU ranges from 120 - 230 °C.

The at least one extrusion agent for the highly conductive filament is chosen from low molecular weight organic additives such as silicone, octadecanoic acid, octadecanamide, octadecanol, calcium stearate, zinc stearate, diurethanes, polypropylene glycol (PPG), polytetramethylene glycol (PTMG), polyethylene glycol (PEG) such as PEG with an average molecular weight between 200 g/mol and 600 g/mol, e.g., PEG200, PEG300, PEG400, PEG500 or PEG600, stearic acid (SA), ethylene bis stearamide (EBS), dimethyl phthalate (DMP), diethyl phthalate (DEP), dibutyl phthalate (DBP), benzyl butyl phthalate (BBP), diethyl hexyl phthalate (DEHP), diaminonaphthalene (DAN), dibutyl adipate (DBA), triphenyl phosphate (TPhP), carboxylated nitrile rubber (XNBR) or hydrocarbon waxes such as polyethylene wax (PE-Wax), polypropylene wax (PP-Wax) or paraffin wax. The low molecular weight organic additives according to the invention have a molecular weight in the range of 100 - 10,000 g/mol, respectively.

Preferably polyethylene glycol (PEG) is used as the at least one extrusion agent for the highly conductive filament. More preferably PEG is used with an average molecular weight between 200 g/mol and 600 g/mol, e.g, PEG200, PEG300, PEG400, PEG500 or PEG600.

For the highly conductive filament, preferably an ionic liquid or an aqueous solution of an ionic liquid is used as secondary liquid.

The ionic liquid for the highly conductive filament may in particular contain a substituted or unsubstituted imidazolium cation, wherein the imidazolium cation of the salt is preferably substituted in the 1- and 3-position or in the 1-, 2- and 3-position with (C1-C6) alkyl groups. More preferably, the imidazolium cation is the 1-ethyl-3-methylimidazolium, 1,3-dimethylimidazolium or 1-butyl-3-methylimidazolium cation. The anion of the ionic liquid is usually a halide, perchlorate, pseudohalide, sulfate, phosphate, alkyl phosphate and/or a C1-C6 carboxylate ion, the halide ion being a chloride, bromide and/or iodide ion, the pseudohalide ion being a cyanide, thiocyanate and/or cyanate ion and the C1-C6 carboxylate ion being formate, acetate, propionate, butyrate, hexanoate, maleate, fumarate, oxalate, lactate and/or pyruvate. Most preferably, 1-butyl-3-methylimidazolium iodide, 1-butyl-3-methylimidazolium chloride, or 1-butyl-3-methylimidazolium bromide is used as secondary liquid.

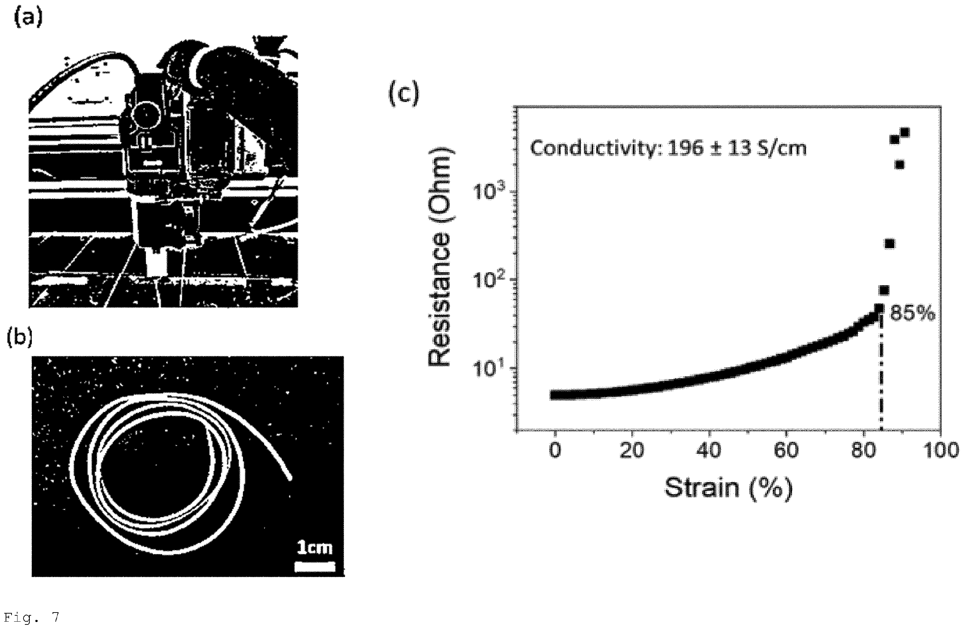

The highly conductive filament according to the invention shows a low resistivity of 0.0063 ± 0.0025 Ω · cm or a high conductivity of 157 ± 80 S/cm when using TPU as thermoplastic polymer (example 2). It is printable using an FDM printer and the printed objects have a low contact resistance between the printed layers. With TPU as elastomer the conductivity is preserved after a strain load up to 85% (figure 7 (c)).

In a further aspect of the invention there is provided a process for producing a highly conductive filament using the highly conductive paste based on a capillary suspension described before, comprising the following steps:
D) Drying the highly conductive paste based on a capillary suspension to obtain a solid sheet;
E) Chopping the solid sheet into uniform granules;
F) Further drying the granules from step E) in a vacuum oven;
G) Melting the granules from step F) in a heated barrel;
H) Extruding the melt into a continuous filament;
I) Winding up the filament on a spool.

In step D) the highly conductive paste is spread into a sheet and is dried, e.g., at room temperature in a ventilated fume hood for 12 - 96 hours or in an oven to obtain a solid sheet.

The wet sheet in step D) has a thickness of 2 - 8 mm. The solid sheet from step D) has a thickness of 0.5 - 6 mm after drying and is chopped in step E) into uniform, for example cubic, granules with a side length of 1 - 6 mm, preferably 2 - 4 mm.

In step F) the granules from step E) are dried for 12 - 60 hours at 50 - 110 °C in a vacuum oven. The drying time and temperature depend very much on the amount of the highly conductive paste, the type of the at least one thermoplastic polymer and the at least one solvent used.

Before melting and extruding, the granules are optionally dried again in a vacuum oven at 70 - 105 °C for 2 - 4 hours to remove residual water/moisture. The water content in the granules for steps G) and H) must not exceed 0.05 %.

The size of the nozzle/die equipped in the extrusion device ranges from 1.4 to 2.4 mm for the fabrication of a filament with a diameter of, e.g., 1.75 mm, and 2.2 to 3.4 mm for the fabrication of a filament with a diameter of, e.g., 2.85 mm. The extrusion temperature is in the range of 120 - 300 °C, preferably 130 - 220 °C. The extrusion temperature is dependent on the melting point of the granules produced in steps E) and F) and is usually 0 - 30 °C lower than the melting point of the granules. The extrusion speed lies in the range of 0.01 - 100 mm/s.

Extrusion devices can be single- or twin-screw extruders, or heated dispensers driven by a piston or by pneumatic pressure.

The use of the at least one extrusion agent is essential for the fabrication of the highly conductive filament according to the invention. The 0.3 - 3 vol.% of the at least one extrusion agent in the highly conductive paste based on a capillary suspension results in a reduction of the melting point and heat enthalpy of the solid granules in step G). This enables the filament to be extruded at a lower temperature. Furthermore, the at least one extrusion agent promotes compatibility between filler and polymer. Both factors prevent phase separation of the at least one thermoplastic polymer and highly conductive silver particles and avoids the destruction of the highly conductive particle network.

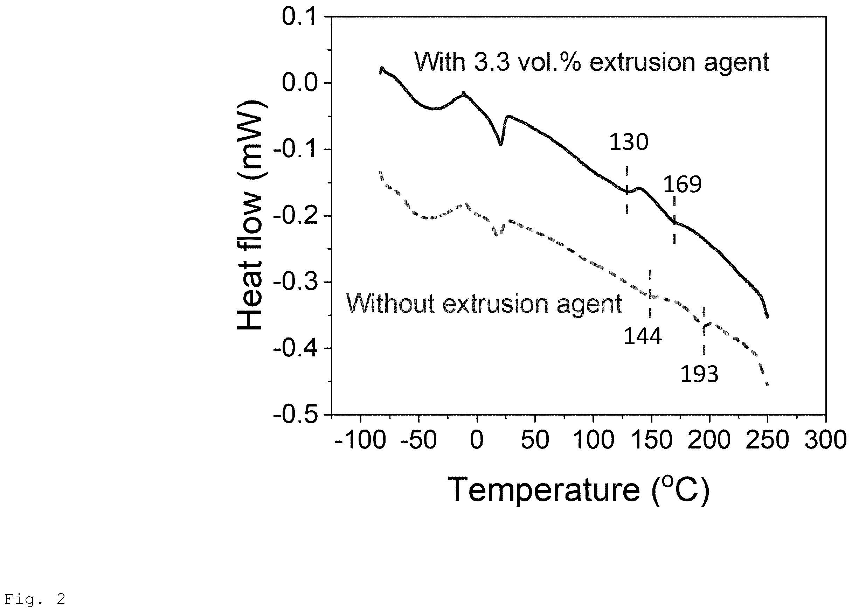

As shown in figure 2, Ag-TPU granules, comprising highly conductive hydrophobic silver particles and TPU as the at least one thermoplastic polymer, but not containing an extrusion agent have a melting point of 193 °C. Addition of 3.3 vol.% of an extrusion agent, with respect to the volume of the granules, results in a reduction of the melting point of the Ag-TPU granules by 24 °C from 193 °C to 169 °C. This enables the filament to be extruded at a temperature of, e.g., 165 °C.

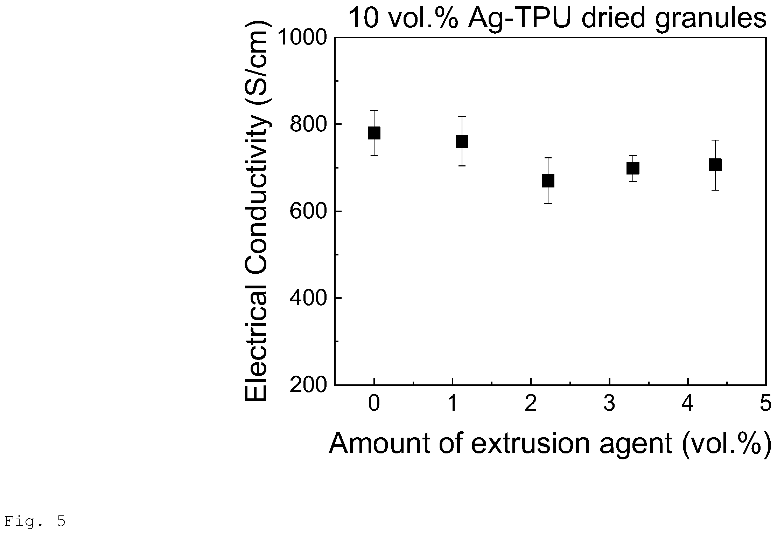

Additionally, in the extrusion step H), the at least one extrusion agent is not completely dissolved in the at least one molten thermoplastic polymer, but diffuses to the extruder surface acting as an external lubricant, which further assists the continuous extrusion. Varying the amount of the extrusion agent does not affect electrical conductivity of the granules to be produced according to the invention (figure 5).

In another embodiment of the invention, the at least one extrusion agent can additionally be coated to the inner surface of the extruder nozzle to lubricate filament extrusion also externally.

With the capillary suspension-based highly conductive paste according to the invention, nozzle clogging, which is often observed with highly filled composites (J. Tan et al., Additive Manufacturing 2018, 23, 294-302; X. Wei et al., Scientific reports 2015, 5, 1, 1-7), does not occur during the extrusion process according to the invention.

In another embodiment of the invention, the highly conductive filament is produced without a solvent in a twin-screw extruder, thus directly forming a filament in a one-step process using at least one thermoplastic polymer, at least one extrusion agent, highly conductive hydrophobic silver particles and a liquid secondary phase.

The present invention adopts a simple and versatile framework for fabricating highly conductive and, in the case of using at least one elastomer as the at least one thermoplastic polymer, also stretchable filaments.

Using a highly conductive paste based on a capillary suspension for filament preparation, a low percolation threshold and a high electrical conductivity (10² - 10⁴ S/cm) is achieved with low consumption of solid conductive silver particles (5 - 30 vol.%). In the case of using at least one elastomer as the at least one thermoplastic polymer the filament according to the invention shows a reversible high electrical conductivity and a reversible deformability and stretchability after strain load that are orders of magnitude higher than that of the filaments of the state of the art.

The employment of at least one extrusion agent suppresses phase separation between the conductive filler and the at least one thermoplastic polymer during the extrusion process using the molten granules according to steps G) and H). Low conductive filler consumption in the highly conductive paste based on a capillary suspension prevents nozzle clogging during filament extrusion. The combination of these two factors enables a continuous highly conductive filament fabrication and a smooth Additive Manufacturing process.

The highly conductive filament of the present invention is applicable for the manufacture of electronic components such as highly conductive circuits, circuit switches, touch pads, sockets, resistors, capacitors, EMI/RFI (electromagnetic interference)/radio-frequency interference) shields, components for wireless and portable communication devices such as mobile phones including RF(radio frequency) antennas, RF filters and other custom RF components.

When using at least one elastomer as the at least one thermoplastic polymer, the highly conductive filament of the present invention can also be applied as soft electronics, such as flexible sensors for the Internet of Things, sensors for monitoring (condition monitoring) of flexible components in the context of Industry 4.0., sensors or contacts for soft robots, robotic fingers, robotic gloves and robotic shoes with pressure-, deformation- and/or temperature-sensors, wearables, electronic skins, clothing with integrated electronic components, electronic components printed on paper or flexible plastic films, flexible, highly conductive connections or biomedical sensors for health monitoring, e.g., for recording real-time data to reflect the physiological condition of human beings.

### Figure 1

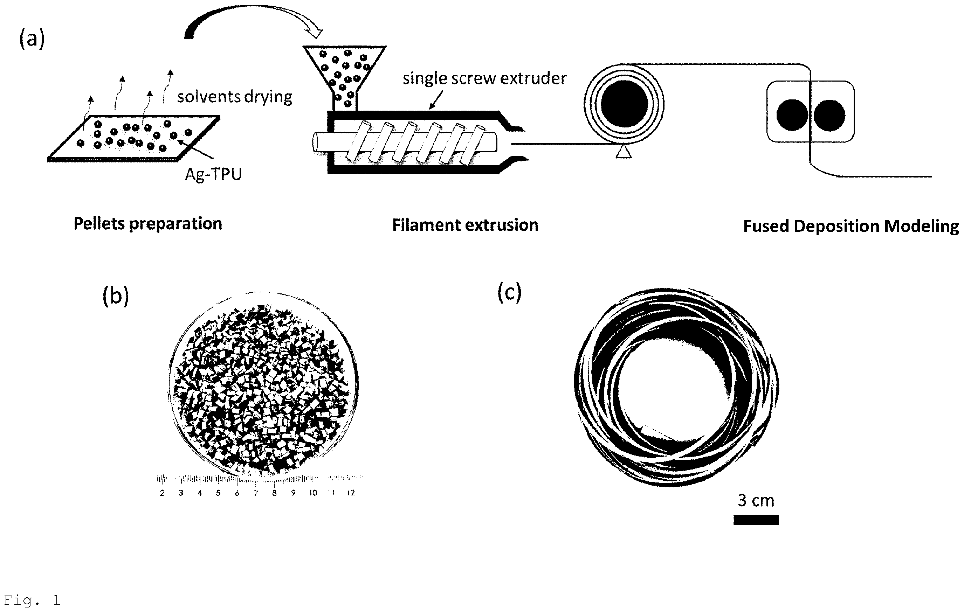

Figure 1 (a) shows a processing route of a highly conductive filament fabrication according to the invention. First, solvents were completely removed from an Ag-TPU paste based on a capillary suspension to obtain a solid Ag-TPU sheet by drying in a vacuum oven. Then the dried solid sheet was chopped into granules with a size of around 2 × 2 × 2 mm (figure 1 (b)) using an electrical scissor (Multi Cutter, SKIL). A commercial single-screw extruder (Noztek Touch) was used to melt the granules and to extrude them into a continuous highly conductive filament. The extrusion temperature was selected based on the melting point of the granules and was usually 0 - 30 °C lower than the melting point of the granules. A filament winder (Noztek Filament Winder 1.0) was used to make a filament spool, as shown in figure 1 (c).

### Figure 2

Figure 2 shows the effect of the extrusion agent on the melting temperature of dried Ag-TPU granules according to the invention:
The melting behavior of dried Ag-TPU granules was determined by differential scanning calorimetry (DSC) (Q200, TA Instrument).

The addition of 3.3 vol.% extrusion agent resulted in a 24 °C reduction of the melting point of the TPU granules. This enabled the filament to be extruded at a temperature of 165 °C.

Additionally, the extrusion agent was not completely dissolved in the molten TPU, but diffused to the extruder surface acting as an external lubricant, which further assisted the continuous extrusion.

### Figure 3

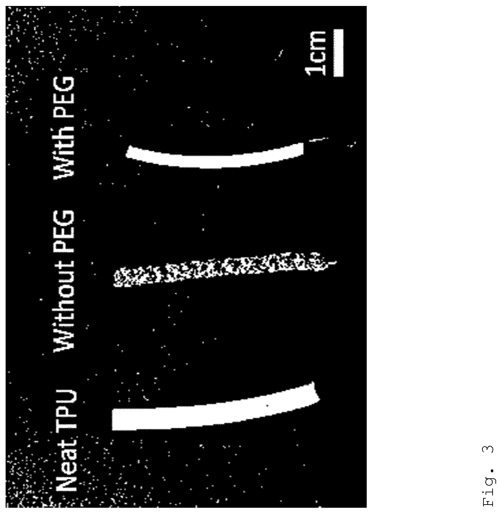

Figure 3 shows a comparison of the morphologies of three extruded filaments extruded from a nozzle with a diameter of 3.2 mm with TPU Elastollan^{®} 1170A:
On the left is shown a neat TPU filament, in the middle is shown a filament extruded from Ag-TPU granules without extrusion agent and on the right is shown a filament extruded from Ag-TPU granules containing an extrusion agent.

The neat TPU filament was extruded at 165 °C and had a diameter of 4.0 mm, which is greater than the nozzle diameter. This effect is typical for polymer extrusion and is known as die swell (Barus effect), where the filament size is bigger than that of the extruder nozzle (A. Harynska et al., Polymers 2018, 10, 12, 1304) .

The extrusion temperature for the Ag-TPU granules was set as 3 - 5 °C lower than melting point of the respective granules. Ag-TPU granules with extrusion agent were extruded at 165 °C. On the other hand, Ag-TPU granules without extrusion agent were extruded at 190 °C. Phase separation occurred during the extrusion of the Ag-TPU granules without extrusion agent. Molten TPU flowed out of nozzle ahead of the silver fillers, resulting in a non-continuous non-stretchable filament including a lot of pores. In contrast, the filament with extrusion agent had a uniform and smooth texture with a uniform diameter of 2.85 mm, smaller than the nozzle diameter. This is known as die contraction (S. B. Kharchenko et al., Nature materials 2004, 3, 8, 564-568), which is attributed to a silver formed particle network interpenetrating the polymer matrix. More importantly, both stretchability and conductivity were preserved.

### Figure 4

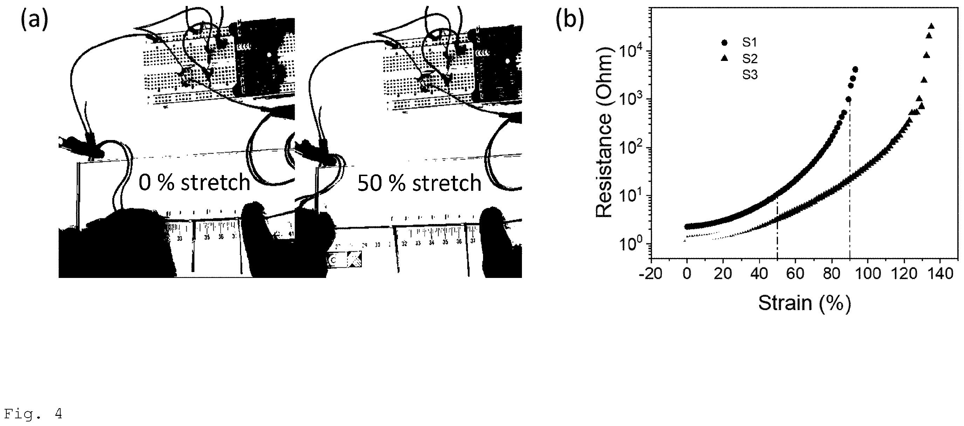

Figure 4 demonstrates the performance of a highly conductive and stretchable filament according to the invention:
In figure 4 (a), the filament with extrusion agent was connected to a LED circuit and stretched to 50% strain. The brightness of the LED did not change at 50% strain, indicating only a small resistance change during stretching. To further test its electromechanical properties, three segments of the mentioned filament with a length of 10 cm were stretched on a uniaxial tensile testing machine (TA-XT Plus Texture Analyzer, Stable Micro Systems, UK) and connected to a digital multimeter (Fluke 287, Fluke Corporation, USA) using copper wires. As shown in figure 4 (b), a low resistance (< 10 Ω) was maintained when stretched up to 50% strain, in correspondence with a constant brightness of the LED in figure 4 (a).

### Figure 5

Figure 5 shows the effect of the extrusion agent on the electrical conductivity of dried Ag-TPU granules according to the invention: Varying the amount of the extrusion agent did not affect electrical conductivity of the granules. However, the conductivity of the extruded filament (157 ± 80 S/cm) was around 4 times lower than that of the granules used as pre-cursor shown in figure 5. This may be due to air bubbles introduced during extrusion.

### Figure 6

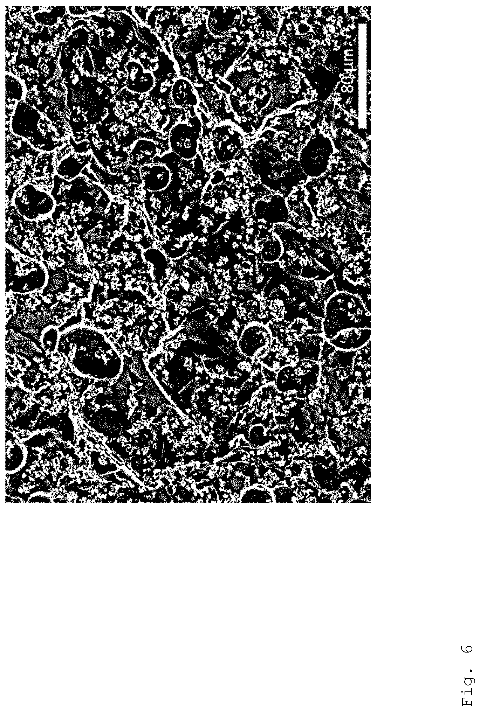

Figure 6 shows a scanning electron microscope (SEM) image taken from a cross-section of an extruded Ag-TPU filament with 3.3 vol.% extrusion agent. Air holes interrupted the continuity of the silver filler network, which accounted for a lower conductivity of the extruded filament.

### Figure 7

Figure 7 demonstrates the printability of the highly conductive filament according to the invention using a customized FDM 3D printer, equipped with a commercial printer head (Extruder QR 2.85/3.00 mm, BondTech) and a printing nozzle of 1.2 mm (Nozzle X - Volcano, E3D) (figure 7 (a)). A continuous thread with a length of 50 cm was successfully printed at a printing temperature of 185 °C (Figure 7 (b)). It has a diameter of 1.15 mm due to die contraction, similarly as observed in filament extrusion with the single-screw extruder (figure 3). The thread had a low resistivity of 0.0051 ± 0.0003 Ω · cm, or a conductivity of 196 ± 13 S/cm, similar as the fed filament. Figure 7 (c) shows the electro-mechanical properties of the FDM printed thread. A segment with a length of 8 cm was stretched using a universal testing machine and the resistance change was recorded using a multimeter. The resistance started from 3 Ω and grew to 84 Ω at a strain of 85%. After this, a sharp jump to 250 Ω indicated the electrical failure of the printed thread.

### Figure 8

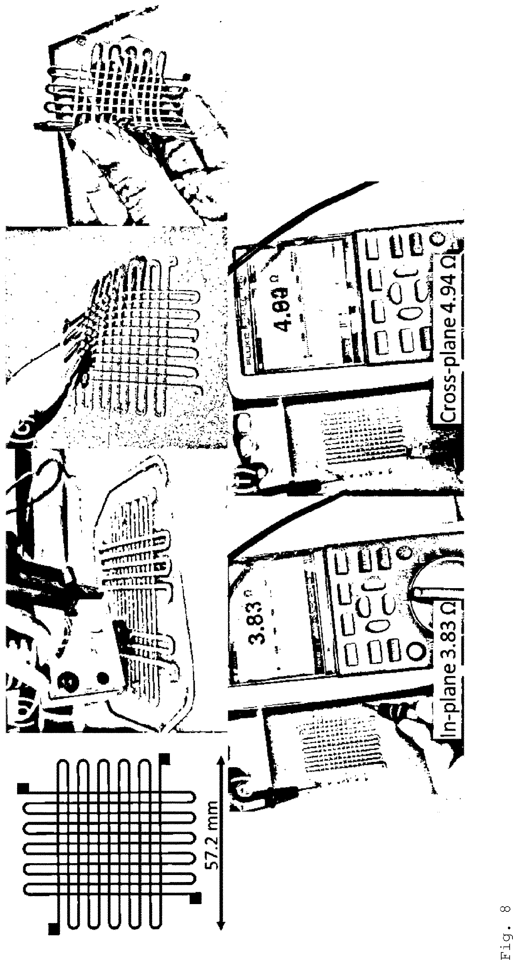

Figure 8 shows the printability of a 3D object using an extruded filament according to the invention and a customized FDM 3D printer equipped with a 2.85 mm extruder head (Extruder QR 2.85/3.00 mm, BondTech). Furthermore, figure 8 shows the pattern design and performance of the printed 3D object.

A filament with a diameter of 2.80 mm was extruded using a silver filled commercial TPU (CS-3DP-SLS 118 ADPPU, Covestro) incorporating around 4 vol.% of an extrusion agent. A printing nozzle of 0.8 mm (Nozzle X - Volcano, E3D) was used to print the 3D object. The printing temperature was 175 °C, at which a continuous print was guaranteed. Figure 8 (a) exhibits a 3D object design consisting of two layers with a dimension of 57.2 × 57.2 × 1.6 mm. Figure 8 (b) records the printing process on a blue tape, and the printed part sticks well to the build plate during printing. Figure 8 (c) shows the peel-off of the printed object from the build plate. Figure 8 (d) shows a flexibility demonstration of the printed object. The in-plane resistance of the first printed layer had a low value of 3.83 Ω (figure 8 (e)). The cross-plane resistance between the first and the second printed layer was 4.94 Ω (figure 8 (f)), comparable to the in-plane resistance.

### Examples:

### Example 1:

### Ag-TPU paste preparation:

Two commercial TPUs (Elastollan^{®} 1170A from BASF SE and CS-3DP-SLS 118 ADPPU, Covestro AG) were used as thermoplastic polymer. 15 g TPU granules were fully dissolved in a solvent mixture of N,N-dimethylformamide (DMF) and propylene glycol methyl ether acetate (PGMEA) at a concentration of 25 vol.%. A low molecular weight polyether ((polyethylene glycol 400, PEG400, Sigma-Aldrich) was employed as an extrusion agent. The extrusion agent was dispersed in the TPU solution at a concentration of around 0.89 vol.% with respect to the total volume of the paste using a planetary mixer (Thinky ARE-250). This corresponds to a volume content of extrusion agent of 3.3 vol.% in the dried composite. 16.2 g hydrophobic silver flakes (FA-S-12, DOWA Electronics Materials) with an average particle size of 2 µm were mixed into the above mixture using the planetary mixer for a total of 20 min in 5 min increments, waiting 5 min between subsequent mixing steps. This corresponds to a volume content of silver of 10 vol.% in the dried composite. 1-butyl-3-methylimidazolium iodide (99%, Sigma-Aldrich), as secondary liquid, was added to the silver suspension and mixed with the planetary mixer. The concentration of secondary liquid in the resulting paste was about 0.2 vol.%.

### Example 2:

### Ag-TPU filament extrusion:

The process of filament extrusion and FDM testing is illustrated in figure 1 (a). The capillary suspension-based paste was poured onto a Teflon plate in a fume hood and spread into a sheet with a thickness of 3 - 4 mm. After 96 hours drying, the semi-dried sheet shrank into around 2 mm in thickness and was chopped into cubic granules with a size of around 2 × 2 × 2 mm using an electrical scissor (Multi Cutter, SKIL). The granule shape is shown in figure 1 (b). The obtained granules were further dried in a vacuum oven at 90 °C for another 48 hours to remove solvents completely. Before extrusion, granules were dried in the vacuum oven at 90 °C for 4 hours to remove water moisture. The water content of the thus obtained extrudable granules was around 0.03%, determined by a moisture analyzer (Halogen Moisture Analyzer HX204,Mettler Toledo).

Filament extrusion was performed using a commercial single screw extruder (Noztek Touch, UK) equipped with a tapered nozzle of 3.2 mm in diameter. Ag-TPU granules, made from Elastollan^{®} 1170A with 3.3 vol.% PEG, showed a melting point of 169 °C, determined by a differential scanning calorimetry (DSC) instrument (Q200, TA Instrument). The granules were extruded at a temperature of 165 °C and the extrusion speed was set as 40 rpm. A filament winder (Noztek Filament Winder 1.0, UK) was attached to make a filament spool. Figure 1 (c) shows a spool of extruded Ag-TPU filament with a diameter of 2.85 mm. Nozzle clogging, which is often observed with highly filled composites (J. Tan et al., Additive Manufacturing 2018, 23, 294-302; X. Wei et al., Scientific reports 2015, 5, 1, 1-7), did not occur during the extrusion process. This is mainly attributed to the low silver loading (~ 10 vol.%) in the granules. Benefiting from using a capillary suspension, the produced filament showed a low resistivity of 0.0063 ± 0.0025 Ω · cm, or a conductivity of 157 ± 80 S/cm, determined by four-point probe measurement with an LCR meter (E4980AL, Keysight).

### Example 3:

### Printability test on an FDM printer

The printability of the extruded highly conductive filament was demonstrated using a customized FDM 3D printer equipped with a 2.85 mm extruder head (Extruder QR 2.85/3.00 mm, BondTech), shown in figure 7 (a). The obtained conductive Ag-TPU filament fabricated from Elastollan^{®} 1170A was printed using a 1.2 mm printing nozzle. A continuously printed thread with a length of 50 cm was successfully printed using this setup (Figure 7 (b)). It has a diameter of 1.15 mm due to die contraction, similarly as observed in the filament extrusion with the single-screw extruder (figure 3). The thread had a low resistivity of 0.0051 ± 0.0003 Ω · cm, or a conductivity of 196 ± 13 S/cm, similar as the fed filament. Figure 7(c) displays the electro-mechanical properties of the FDM printed thread. A filament segment with a length of 8 cm was stretched using a universal testing machine and the resistance change was recorded using a multimeter. The resistance started from 3 Ω and grew to 84 Ω at a strain of 85%. After this, a sharp jump to 250 Ω indicated the electrical failure of the printed thread.

## Claims

1. A highly conductive paste based on a capillary suspension, comprising:
(i) A liquid primary phase comprising, as a polymer base, at least one thermoplastic polymer dissolved in at least one solvent, wherein the volume content of the at least one thermoplastic polymer in the at least one solvent is in the range of 10% to 50%, wherein the liquid primary phase takes up 73.90 to 98.1985 vol.% with respect to the total volume of the paste;
(ii) at least one extrusion agent with a volume content in the range of 0.3 to 3 vol.% with respect to the total volume of the paste;
(iii) 1.5 to 21.0 vol.% of highly conductive hydrophobic silver particles, with respect to the total volume of the paste, as highly conductive solid phase;
(iv) a liquid secondary phase, with a volume content in the range of 0.0015 to 2.1 vol.% with respect to the total volume of the paste, while the volume ratio ρ between said liquid secondary phase and said highly conductive solid phase falls in the range of 0.001 to 0.1, wherein the liquid secondary phase is immiscible with the liquid primary phase and does not wet the highly conductive solid phase, so that the three-phase system creates a capillary suspension.

2. The paste according to claim 1, wherein the at least one thermoplastic polymer is selected from acrylonitrile butadiene styrene (ABS), polycarbonate (PC), polylactic acid (PLA), polyether ether ketone (PEEK), polyetherimide (PEI), high-density polyethylene (HDPE), polyethylene terephthalate (PET), polyphenylsulfone (PPSU), high impact polystyrene (HIPS), polyvinyl alcohol (PVA), polypropylene (PP), polymethylmethacrylate (PMMA), acrylonitrile-styrene-acrylate (ASA), polyoxymethylene (POM), lignin, or thermoplastic elastomers such as thermoplastic polyurethane (TPU), styrenic block copolymers (SBC), thermoplastic polyamide (TPA), thermoplastic copolyester (TPC), thermoplastic vulcanizate (TPV), thermoplastic polyolefin elastomer (TPO) or thermoplastic styrene (TPS).

3. The paste according to claims 1 or 2, wherein the at least one thermoplastic polymer is at least one elastomer.

4. The paste according to any one of claims 1 to 3, wherein the at least one extrusion agent is chosen from low molecular weight organic additives such as silicone, octadecanoic acid, octadecanamide, octadecanol, calcium stearate, zinc stearate, diurethanes, polypropylene glycol (PPG), polytetramethylene glycol (PTMG), polyethylene glycol (PEG) such as PEG with an average molecular weight between 200 g/mol and 600 g/mol, e.g., PEG200, PEG300, PEG400, PEG500 or PEG600, stearic acid (SA), ethylene bis stearamide (EBS), dimethyl phthalate (DMP), diethyl phthalate (DEP), dibutyl phthalate (DBP), benzyl butyl phthalate (BBP), diethyl hexyl phthalate (DEHP), diaminonaphthalene (DAN), dibutyl adipate (DBA), triphenyl phosphate (TPhP), carboxylated nitrile rubber (XNBR) or hydrocarbon waxes such as polyethylene wax (PE-Wax), polypropylene wax (PP-Wax) or paraffin wax, wherein the low molecular weight organic additives have a molecular weight in the range of 100 - 10,000 g/mol, respectively.

5. The paste according to any one of claims 1 to 4, wherein the liquid secondary phase comprises an ionic liquid or an aqueous solution of an ionic liquid.

6. A process for producing a highly conductive paste based on a capillary suspension, according to any one of claims 1 to 5, comprising the following steps:
A) Providing (i) a liquid primary phase comprising, as a polymer base, at least one thermoplastic polymer dissolved in at least one solvent, wherein the volume content of the at least one thermoplastic polymer in the at least one solvent is in the range of 10% to 50%, wherein the liquid primary phase takes up 73.90 to 98.1985 vol.% with respect to the total volume of the paste;
B) Pre-dispersing (ii) 0.3 to 3 vol.% of at least one extrusion agent, with respect to the total volume of the paste, in the liquid primary phase of step A);
C) Dispersing 1.5 to 21.0 vol.% of (iii) highly conductive hydrophobic silver particles, with respect to the total volume of the paste, as highly conductive solid phase, as well as (iv) a liquid secondary phase, with a volume content in the range of 0.0015 to 2.1 vol.% with respect to the total volume of the paste, in the mixture of the liquid primary phase and the at least one extrusion agent, while the volume ratio ρ between said liquid secondary phase and said highly conductive solid phase falls in the range of 0.001 to 0.1, wherein the liquid secondary phase is immiscible with the liquid primary phase and does not wet the highly conductive solid phase, so that the three-phase system creates a capillary suspension.

7. A highly conductive filament for Fused Deposition Modeling, comprising:
(i) A primary phase comprising, as a polymer base, at least one thermoplastic polymer, wherein the primary phase takes up 55.00 to 93.995 vol.% with respect to the total volume of the filament;
(ii) at least one extrusion agent with a volume content in the range of 1 to 12 vol.% with respect to the total volume of the filament;
(iii) 5 to 30 vol.% of highly conductive hydrophobic silver particles, with respect to the total volume of the filament, as highly conductive solid phase;
(iv) a liquid secondary phase, with a volume content in the range of 0.005 to 3.0 vol.% with respect to the total volume of the filament, while the volume ratio p between said liquid secondary phase and said highly conductive solid phase falls in the range of 0.001 to 0.1.

8. The filament according to claim 7, wherein the at least one thermoplastic polymer is selected from acrylonitrile butadiene styrene (ABS), polycarbonate (PC), polylactic acid (PLA), polyether ether ketone (PEEK), polyetherimide (PEI), high-density polyethylene (HDPE), polyethylene terephthalate (PET), polyphenylsulfone (PPSU), high impact polystyrene (HIPS), polyvinyl alcohol (PVA), polypropylene (PP), polymethylmethacrylate (PMMA), acrylonitrile-styrene-acrylate (ASA), polyoxymethylene (POM), lignin, or thermoplastic elastomers such as thermoplastic polyurethane (TPU), styrenic block copolymers (SBC), thermoplastic polyamide (TPA), thermoplastic copolyester (TPC), thermoplastic vulcanizate (TPV), thermoplastic polyolefin elastomer (TPO) or thermoplastic styrene (TPS).

9. The filament according to claims 7 or 8, wherein the at least one extrusion agent is chosen from low molecular weight organic additives such as silicone, octadecanoic acid, octadecanamide, octadecanol, calcium stearate, zinc stearate, diurethanes, polypropylene glycol (PPG), polytetramethylene glycol (PTMG), polyethylene glycol (PEG) such as PEG with an average molecular weight between 200 g/mol and 600 g/mol, e.g., PEG200, PEG300, PEG400, PEG500 or PEG600, stearic acid (SA), ethylene bis stearamide (EBS), dimethyl phthalate (DMP), diethyl phthalate (DEP), dibutyl phthalate (DBP), benzyl butyl phthalate (BBP), diethyl hexyl phthalate (DEHP), diaminonaphthalene (DAN), dibutyl adipate (DBA), triphenyl phosphate (TPhP), carboxylated nitrile rubber (XNBR) or hydrocarbon waxes such as polyethylene wax (PE-Wax), polypropylene wax (PP-Wax) or paraffin wax, wherein the low molecular weight organic additives have a molecular weight in the range of 100 - 10,000 g/mol, respectively.

10. The filament according to any one of claims 7 to 9, wherein the liquid secondary phase comprises an ionic liquid or an aqueous solution of an ionic liquid.

11. The filament according to any one of claims 7 to 10, wherein the at least one thermoplastic polymer is at least one elastomer.

12. A process for producing a highly conductive filament according to any one of claims 7 - 11, using the highly conductive paste based on a capillary suspension according to any one of claims 1 - 5 comprising the following steps:
D) Drying the highly conductive paste based on a capillary suspension to obtain a solid sheet;
E) Chopping the solid sheet into uniform granules;
F) Further drying the granules from step E) in a vacuum oven;
G) Melting the granules from step F) in a heated barrel;
H) Extruding the melt into a continuous filament;
I) Winding up the filament on a spool.

13. Use of the highly conductive filament according to any one of claims 7 - 11 in a Fused Deposition Modeling process.

14. Use of the highly conductive filament according to any one of claims 7 - 11 for the manufacture of electronic components such as highly conductive circuits, circuit switches, touch pads, sockets, resistors, capacitors, EMI/RFI shields or components for wireless and portable communication devices such as mobile phones.

15. Use of the highly conductive filament according to claim 11 as soft electronics, such as flexible sensors for the Internet of Things, sensors for monitoring of flexible components in the context of Industry 4.0., sensors or contacts for soft robots, robotic fingers, robotic gloves and robotic shoes with pressure-, deformation- and/or temperature-sensors, wearables, electronic skins, clothing with integrated electronic components, electronic components printed on paper or flexible plastic films, flexible, highly conductive connections or biomedical sensors for wearable health monitoring.
